Europäisches Patentamt

European Patent Office

Office européen des brevets

(19)

(11) Numéro de publication : **0 056 342**
**B2**

(12) ## NOUVEAU FASCICULE DE BREVET EUROPÉEN

(45) Date de publication du nouveau fascicule du brevet : 28.06.89

(51) Int. Cl.⁴ : **C 08 F220/18, C 10 M149/00**

(21) Numéro de dépôt : 82400012.9

(22) Date de dépôt : 06.01.82

(54) **Additifs pour huiles lubrifiantes à base de styrène et de méthacrylates d'alkyles lourds en C12-C20, procédé de fabrication et applications.**

(30) Priorité : 12.01.81 FR 8100410

(43) Date de publication de la demande : 21.07.82 Bulletin 82/29

(45) Mention de la délivrance du brevet : 21.08.85 Bulletin 85/34

(45) Mention de la décision concernant l'opposition : 28.06.89 Bulletin 89/26

(84) Etats contractants désignés : AT BE CH DE FR GB IT LI LU NL

(56) Documents cités :
BE—A— 752 956
DE—A— 2 250 406
DE—A— 2 805 826
DE—C— 1 118 971
FR—A— 917 069
FR—A— 2 339 669
GB—A— 784 624
GB—A— 1 424 977
US—A— 3 506 574
US—A— 4 136 047
PATENTS ABSTRACTS OF JAPAN, vol. 2, no. 81, 28 juin 1978 page 1108C78
PATENTS ABSTRACTS OF JAPAN, vol. 2, no. 126, 21 octobre 1978 page 2650C78
ULLMANN'S Encyclopädie der technischen Chemie, 4. Auflage, Band 20, p. 552, Verlag Chemie, WEINHEIM

(73) Titulaire : SOCIETE FRANCAISE D'ORGANO-SYNTHESE Société Anonyme dite:
114, avenue Louis-Roche
F-92234 Gennevilliers (FR)

(72) Inventeur : Proux, Yves Charles
39, rue des Cévennes
F-75015 Paris (FR)
Inventeur : Perron, Alain Michel
16 bis, avenue Foch
F-95220 Herblay (FR)

(74) Mandataire : Fabre, Madeleine-France
RHONE-POULENC INTERSERVICES Service Brevets Chimie 25, quai Paul Doumer
F-92408 Courbevoie Cédex (FR)

## EP 0 056 342 B2

## Description

La présente invention concerne des additifs pour huiles lubrifiantes à base de composés styréniques et de méthacrylates d'alkyles lourds, éventuellement modifiés par un comonomère supplémentaire et par greffage de composé(s) vinylique(s), leurs applications pour l'amélioration des propriétés de telles huiles et leur procédé de préparation.

Le secteur de la technique considérée est celui des composés macromoléculaires, plus particulièrement des produits de polymérisation ainsi que celui des compositions lubrifiantes.

On demande aux huiles moteur des caractéristiques de viscosité aussi constantes que possible dans un large intervalle de température, et un bas point d'écoulement. On recherche donc des additifs conférant aux huiles un indice de viscosité élevé, et un fort pouvoir épaississant, lequel peut être limité par les contraintes de résistance aux cisaillements mécaniques. On peut rechercher aussi des caractéristiques supplémentaires comme le pouvoir dispersant à haute et basse température.

On connaît de nombreux additifs pour huiles qui possèdent certaines de ces propriétés mais qui, en revanche, n'améliorent pas les autres caractéristiques recherchées pour les huiles. Ainsi les polyméthacrylates lourds ont un bon maintien de la viscosité avec la température et abaissent le point d'écoulement de l'huile mais ont par contre un pouvoir épaississant limité. Au contraire les polyoléfines telles que les copolymères éthylène-propylène ou les copolymères diène-styrène hydrogénés ont un pouvoir épaississant supérieur.

On a déjà cherché à réunir les propriétés des polyméthacrylates et des composés diène-styrène, mais ils s'avèrent incompatibles et leur mélange donne lieu à des décantations.

Il est possible d'effectuer un greffage radicalaire en phase huileuse de méthacrylates lourds soit sur une polyoléfine, soit sur un copolymère diène-styrène hydrogéné. Le produit obtenu ne présente pas de propriétés supérieures à celles des polyméthacrylates ou des polyoléfines pris séparément. En revanche ces polymères sont alors compatibles avec la macromolécule hydrocarbonée ayant servi au greffage, les mélanges ainsi obtenus ayant alors une efficacité accrue.

Une telle méthode s'avère en pratique lourde à réaliser : les copolymères oléfiniques ou styréniques hydrogénés sont à préparer. Il faut ensuite greffer les méthacrylates puis effectuer un mélange avec les polyoléfines.

Le brevet anglais 1 424 977 divulgue des tétrapolymères réalisés à partir des monomères des méthacrylates de dialkylaminoalkyl, des méthacrylates d'alkyle en $C_{10}$ à $C_{14}$, des méthacrylates d'alkyle en $C_{16}$ à $C_{20}$ et d'un composé styrénique. Ces produits améliorent le point de viscosité et le point d'écoulement des huiles.

Le problème à résoudre est la difficulté à réunir les propriétés essentielles dans un seul produit destiné à améliorer les caractéristiques d'une huile lubrifiante.

Cet objectif est atteint dans le présente invention qui vise des additifs pour huiles lubrifiantes essentiellement constitués par des copolymères réalisés à partir de monomères styréniques et d'au moins un méthacrylate d'alkyle en $C_{12}$-$C_{20}$, caractérisés en ce que le pourcentage de monomère(s) de styrène, exprimé en poids et rapporté au poids total des monomères, est compris entre 35 et 55 %. Lesdits copolymères ont une polydispersité aussi faible que possible, un paramètre de solubilité proche de celui des huiles auxquelles lesdits additifs sont destinés et une masse moléculaire en poids comprise entre 80 000 et 200 000, en ce que le(s) dit(s) méthacrylate(s) d'alkyle(s) est (sont) pris dans le groupe de composés suivants : $C_{16}$-$C_{20}$ et $C_{12}$-$C_{15}$, en ce qu'un méthacrylate d'alkyle en $C_{16}$-$C_{20}$ est au moins présent pour 80 % en poids rapporté au poids total des alkylméthacrylates, et en ce qu'ils sont modifiés par un méthacrylate supplémentaire copolymérisé, choisi dans le groupe formé par les méthacrylates de dialkylaminoalkyle, et par au moins un monomère dispersant greffé choisi parmi la N-vinylpyrrolidone, le N-vinylimidazole, la N-vinylpyridine et les dérivés analogues à fonction azotée.

Des additifs préférentiels sont des copolymères à base de styrène et de méthacrylate(s) d'alkyle(s) lourd(s) pris dans les groupes des alkyles $C_{16}$-$C_{20}$ et $C_{12}$-$C_{15}$ ; le pourcentage de méthacrylate d'alkyle en $C_{16}$-$C_{20}$, en poids rapporté au poids total des méthacrylates, est d'au moins 80 % environ. Le copolymère est constitué de motifs styréniques et méthacrylates lourds qui s'enchaînent aussi régulièrement que possible et possède une polydispersité aussi faible que possible, un paramètre de solubilité proche du paramètre de solubilité de l'huile à laquelle il est destiné et une masse moléculaire en poids comprise entre 80 000 et 200 000 (méthode de G.P.C. basée sur le polystyrène standard).

Dans ce qui suit, les expressions « polydispersité » des polymères et paramètre de solubilité des polymères auront la signification ci-après :

la polydispersité d'un polymère est définie comme étant le rapport Mw/Mn, à savoir le rapport de la masse moléculaire moyenne en poids à la masse moléculaire moyenne en nombre ;

le paramètre de solubilité est une valeur S qui représente la solubilité d'un polymère donné dans un solvant.

Le tableau I ci-après donne la composition et certaines propriétés des additifs mentionnés ci-dessus. On voit que les additifs préférés seront des terpolymères du type méthacrylate de cétyle (50 %)/méthacrylate de lauryle (10 %)/styrène (40 %). Les deux essais référencés Pe 529 et LCMc 1295 correspondent à deux opérateurs distincts, ce qui explique la légère différence entre les résultats numériques.

2

Ce tableau I montre également qu'une proportion de 100 % de méthacrylate d'alkyle en $C_{16}$-$C_{20}$ (par rapport aux méthacrylates) [références Pe 511 et Pe 525] ne donne pas les meilleurs résultats, en particulier lorsque la teneur en styrène est simultanément faible [Pe 511] ce qui conduit à une très grande sensibilité aux contraintes de cisaillement ($\tau$ = 26,6), ce qui rend le produit inacceptable malgré le très bon pouvoir épaississant (E = 3,6).

Dans toute la présente demande, les abréviations auront les significations suivantes :

MA Ce : méthacrylates d'alkyles en $C_{16}$-$C_{20}$ : (de cétyle)
Ma Lau : méthacrylates d'alkyles en $C_{12}$-$C_{15}$ : (de lauryle)
MADAME : méthacrylate de diméthylaminoéthyle
Mw : masse moléculaire en poids
E : pouvoir épaississant dans la 200 N (quantité d'additif pur nécessaire pour obtenir 14 mm²/s ou cSt à 100 °C = poids de copolymère/poids total)
$\tau$ : taux de cisaillement Orbahn (DIN 51 382)
P P : point d'écoulement (°C) [NORME AFNOR P60105]
Dp : pouvoir dispersant mesuré par test à la tache à 220 °C
A2EH : acrylate d'éthyl-2 hexyle
VIE : indice de viscosité
NVP : N-vinylpyrrolidone
NVI : N-vinylimidazole.

L'essai à la tache est effectué de façon empirique selon la méthode résumée ci-après.
On effectue les opérations suivantes :

Peser entre 0,16 g et 0,21 g d'additif à tester puis compléter avec du sludge chargé à 1 % de matière charbonneuse pour obtenir la concentration de 4,21 et 0,5 %.

Chauffer à 220 °C pendant 2 h, puis déposer 1 goutte de chaque produit sur le papier Durieux 122 bis.

Mesurer le pouvoir dispersant 24 h après à l'aide d'une gamme étalon selon la cotation suivante :
5 : très bon pouvoir dispersant
4 : bon pouvoir dispersant (le centre de la tache déposée est aperçu)
3 : pouvoir dispersant moyen
2 : pouvoir dispersant médiocre
1 : pouvoir dispersant très mauvais (la tache ne s'étale pas mais traverse le papier)
0 : aucun pouvoir dispersant

Le premier chiffre à gauche donne le pouvoir dispersant de la solution concentrée à 4 % ; pour Pe 538 c'est 5, 4 indiquant le pouvoir dispersant à 0,5 % (cf. Tableau III).

Si les trois premiers chiffres à gauche ne sont pas égaux à 5, le produit est inefficace comme dispersant. Quant au chiffre de droite, il doit être aussi proche que possible de 5, et la valeur 3 est à peine acceptable.

Le pouvoir épaississant augmente avec la masse moléculaire, en revanche la résistance au cisaillement diminue quand celle-ci s'accroît ; il est donc impératif d'avoir une masse moléculaire déterminée et un indice de polydispersité le plus proche possible de 1.

Etant donné que l'on travaille en masse, on atteindra selon l'invention des polydispersités de 2 à 2,5 environ.

Dans une forme de réalisation, ledit copolymère est mélangé à un copolymère styrénique, par exemple dans un rapport de 90/10 à 50/50 en poids. Audit additif, il peut être également adjoint un antioxydant.

Le procédé de fabrication de tels additifs comporte une polymérisation en masse, en présence de catalyseur(s) radicalaire(s), de la quantité totale de dérivé styrénique et des méthacrylates après dissolution dans une quantité minimale de solvant.

Ce procédé sera détaillé ci-après.

L'avantage principal de l'invention est que ces nouveaux copolymères ont les propriétés requises pour améliorer les qualités de l'huile, en particulier le VIE et le point d'écoulement (cf. tableau II ci-après).

Ces nouveaux copolymères sont en outre compatibles par simple mélange avec d'autres copolymères tels que les polymères styréniques ; on améliore ainsi le pouvoir épaississant de ces nouveaux copolymères, tout en conservant leurs propriétés intrinsèques.

Un autre avantage est leur procédé de fabrication plus simple, de durée moindre que dans l'art antérieur, et par conséquent moins coûteux.

De tels additifs sont également plus économiques de par la nature même des composants de départ et de leur coût de fabrication. Ils peuvent être proposés à l'état brut ou dissous dans une huile support. Leur domaine d'application est la formulation d'huiles moteur et hydrauliques.

Les autres caractéristiques et avantages seront mieux compris à la lecture de la description qui va suivre et des exemples de réalisation non limitatifs.

Les additifs sont des copolymères réalisés à partir des monomères suivants :

1. styrène, substitué ou non, par exemple par un radical alkyle inférieur, dans des proportions en poids rapporté au poids total des composants, de 35 à 55 %, préférentiellement de 40 à 50 %.

2. au moins un méthacrylate d'alkyle lourd en $C_{12}$-$C_{20}$ dans des proportions, en poids rapporté au poids total des composants, de 65 à 45 %, préférentiellement de 60 à 50 %.

Le(s) méthacrylate(s) lourd(s) comporte(nt) au moins 80 % en poids de méthacrylate d'alkyle en $C_{16}$-$C_{20}$, rapporté au poids total des méthacrylates d'alkyles lourds. Ce sont des méthacrylates d'alcools lourds, naturels ou synthétiques.

L'utilisation de méthacrylates lourds du groupe $C_{16}$-$C_{20}$ permet de baisser le paramètre de solubilité du copolymère final et ainsi accroît le pouvoir épaississant de celui-ci.

Les additifs ci-dessus du type terpolymère, sont modifiés par copolymérisation en masse d'un comonomère supplémentaire, ce qui donne un tétrapolymère, puis par double greffage simultané de ce tétrapolymère par des monomères vinyliques.

Ledit comonomère supplémentaire sera choisi parmi les méthacrylates de dialkylaminoalkyle, et utilisé en proportion de 0,5 à 5 % par rapport au poids total des composants.

Les meilleurs résultats ont été obtenus avec le méthacrylate de diméthyleaminoéthyle employé à raison d'environ 1 % en poids, par rapport au poids total des composants.

Lesdits monomères vinyliques seront choisis parmi les dérivés à fonction azotée, et notamment N-vinylpyrrolidone, N-vinylimidazole et N-vinylpyridine, à raison de 1 à 3 % du poids total des composants.

Les meilleurs résultats ont été obtenus avec la combinaison de la N-vinylpyrrolidone et du N-vinylimidazole dans un rapport de 1/1 à 2/1 environ.

Une formulation typique d'additif modifié, qui donne d'excellents résultats, est la suivante :

pour 100 parties en poids du tétrapolymère (ou pour 100 parties en poids de l'additif modifié) :

1 % en poids de MADAME (méthacrylate de diméthylaminoéthyle) copolymérisé en masse ;

1 % en poids de N-vinylpyrrolidone et 0,5 % de N-vinylimidazole greffés ensuite simultanément.

On notera qu'il est essentiel que le méthacrylate azoté soit copolymérisé en masse avec les monomères du terpolymère décrit plus haut (selon un mode opératoire détaillé ci-après) et que les monomères vinyliques soient ensuite greffés simultanément.

Si l'une de ces conditions n'est pas remplie, par exemple si le méthacrylate azoté est greffé, on obtient des résultats médiocres.

Ceci est mis en évidence par le tableau III ci-après dans lequel le terpolymère de base contient en % relatifs 50 % MA Ce 10 % Iau et 40 % styrène (Pe 529).

Les essais LCM c 1316 et 1320 montrent que le méthacrylate azoté doit être impérativement polymérisé en masse et non greffé.

L'essai Pe 538, malgré l'absence de NVI, peut paraître intéressant ; en réalité, il correspond à 4 % d'agents modifiants et est donc très coûteux. Cette quantité de 4 % est impossible à réduire, comme le montre l'essai LCMc 1309.

Les essais P 573 à LCMc 1339 sont donc les seuls correspondant à de très bons produits peu onéreux.

Les additifs modifiés à propriétés dispersantes, selon l'invention, sont donc spécifiques par leur composition, leur procédé de préparation et leurs propriétés.

Ces additifs, c'est-à-dire les terpolymères de styrène et de méthacrylates lourds dans leur forme modifiée (tétrapolymères doublement greffés), sont compatibles physiquement avec les copolymères connus pour leur excellent pouvoir épaississant, tels que ceux à base de styrène : copolymères styrène-isoprène hydrogéné, styrène-butadiène hydrogéné, styrène-isobutène. Il n'est pas nécessaire, comme dans l'art antérieur, de soumettre un tel polymère styrénique à une réaction chimique pour obtenir un produit homogène. Dans le cas présent, un simple mélange des deux copolymères est réalisé. Cette propriété offre l'avantage de proposer des produits à pouvoir épaississant renforcé ou de permettre à l'usager de faire le mélange lui-même en cas de besoin.

Un « mélange » extrêmement intéressant sera celui de la forme modifiée de l'additif selon l'invention (c'est-à-dire tétrapolymère greffé) et d'un des copolymères styréniques indiqués ci-dessus, car ceux-ci ne présentent en effet aucun pouvoir dispersant, lequel est alors amené dans le « mélange » par l'additif modifié selon l'invention.

Une autre variante prévoit d'adjoindre, d'une manière connue, aux copolymères un antioxydant usuel.

Pour réaliser les terpolymères on procède à une polymérisation radicalaire en masse pratiquement sans solvant. On utilise une quantité minimale de solvant, en tous cas inférieure à celles de l'art antérieur qui sont de l'ordre de 30 % du poids des composants de départ. Au contraire, dans le présent procédé, on ne dépasse pas 5-10 % en poids de solvant rapporté au poids total des monomères de départ de telle sorte que le solvant n'a que peu d'influence sur la polymérisation.

Cette polymérisation et les pourcentages de monomères de départ permettent d'obtenir un copolymère final dont les motifs styrène-méthacrylate s'enchaînent aussi régulièrement que possible, tendant vers une répartition uniforme de chacun des motifs en fonction des proportions des monomères.

Le copolymère final a une masse moléculaire en poids comprise entre 80 000 et 200 000 (mesurée par la méthode de G.P.C. au polystyrène standard), une polydispersité aussi faible que possible et un

4

paramètre de solubilité aussi proche que possible du paramètre de solubilité de l'huile et des autres additifs éventuels, en général autour de 8.

Les copolymères obtenus se présentent sous forme d'une masse compacte qui peut être vendue soit à l'état brut, soit à l'état dissous dans l'huile avec, en variante, la présentation sous forme de mélange avec un copolymère styrénique. Les mélanges additif (ou additif modifié)/polymère styrénique sont à 90/10 à 50/50 environ en poids. Le tableau IV représente la viscosité à 100 °C (en mm²/s ou cSt) d'un mélange d'additif Pe 529 (cf. tableau I) et de styrène-isoprène hydrogéné, à raison de 3 % dans de l'huile 200 NEUTRAL, en fonction du pourcentage relatif de styrène-isoprène hydrogéné dans le mélange. Le taux de cisaillement $\tau$ est nettement inférieur à celui des polyméthacrylates connus.

L'application d'un tel copolymère à l'amélioration des huiles lubrifiantes, par exemple celles commercialisées sous l'appellation « 150 NEUTRAL », « 200 NEUTRAL », est réalisée par l'addition de 1 à 5 % du poids de copolymère de styrène et méthacrylates rapporté au poids total, de façon à obtenir la viscosité finale désirée de l'huile ainsi traitée, par exemple d'environ 14 cSt à 100 °C pour l'huile « 200 NEUTRAL ».

Les terpolymères sont préparés de la manière suivante : les monomères sont additionnés d'une quantité de toluène (ou d'un autre solvant léger équivalent) égale à 10 % du poids total des monomères, et d'environ 3 ‰ d'un catalyseur radicalaire adéquat, comme l'azobisisobutyronitrile (AIBN). Le dixème de cette masse réactionnelle est introduit, sous atmosphère neutre (notamment sous azote), dans un réacteur et porté à 85 °C environ, sous agitation, puis on coule en deux à trois heures le reste de la masse réactionnelle initiale. On maintient la température à environ 85 °C pendant une heure après la fin de la coulée. La température masse est portée à 125 °C environ, et un catalyseur radicalaire de fin de polymérisation, du type perbenzoate de butyle tertiaire, est alors ajouté dans les proportions connues de l'homme de métier. La réaction est ensuite terminée. Le toluène est finalement distillé sous pression réduite, la température masse étant progressivement portée vers 140 °C. La résine est coulée à chaud.

Pour préparer les tétrapolymères doublement greffés, on opère préférentiellement selon le mode opératoire suivant :

polymérisation en masse des quatre monomères formant le tétrapolymère, selon la technique décrite ci-dessus pour les terpolymères, mais avec seulement les 4/5 de la quantité du catalyseur, puis

réactivation des chaînes macromoléculaires par le dernier 1/5 de la quantité du catalyseur,

addition du mélange des monomères vinyliques (notamment NVP et NVI),

montée à 125 °C et terminaison de la réaction comme décrite ci-dessus.

Une variante de ce procédé consiste, au lieu d'effectuer la montée à 125 °C, et d'ajouter le catalyseur de fin de polymérisation, à effectuer un palier plus long à 85 °C, sans ajouter de catalyseur de fin de polymérisation, mais en continuant l'addition de portions d'AIBN. On obtient alors des propriétés qui peuvent être légèrement modifiées.

On distille le toluène et coule la résine comme précédemment.

On trouvera ci-dessous deux exemples de pouvoirs dispersants que l'on peut obtenir dans ces conditions, selon l'invention :

Additif modifié Pe 611 (tétrapolymère 50-10-40 % en MACe, MALau et styrène respectivement, 1 % MADAME et respectivement 1 et 0,5 % de NVP et NVI :

seul : essai à la tache 5 5 5 4 +

mélange 80 %/20 % de Pe 611 et de « SHELLVIS » (copolymère styrène/isoprène hydrogéné) :

essai à la tache 5 5 5 4

Les méthacrylates d'alkyles lourds utilisés sont un mélange comportant des « impuretés » : ainsi dans la composition de méthacrylates d'alkyles en $C_{12}$-$C_{15}$, on peut trouver des composés en $C_{10}$-$C_{11}$ et/ou $C_{16}$, n'excédant pas 3 % et, dans celle des méthacrylates d'alkyles en $C_{16}$-$C_{20}$, on décèle la présence de composés en $C_{12}$-$C_{14}$ en teneur globale d'au plus 6 %.

Bien entendu, sans sortir du cadre de l'invention, des modifications peuvent être apportées par l'homme de l'art aux produits et procédés qui viennent d'être décrits uniquement à titre d'exemples non limitatifs.

(Voir tableaux pages 6 et 7)

# EP 0 056 342 B2

Tableau I

Influence de la composition sur le pouvoir épaississant et le taux de cisaillement

| Essai | MA Ce | MA Lau | A2EH | Styrène | Mw | E | $\tau$ |
|---|---|---|---|---|---|---|---|
| Pe 511 | 75 | | | 25 | 183 450 | 3,6 | 26,6 |
| Pe 522 | 50 | | 25 | 25 | 106 470 | 5,5 | 6 |
| Pe 524 | | 50 | | 50 | 101 280 | 5,5 | 5,4 |
| Pe 525 | 60 | | | 40 | 209 800 | 4,1 | 14,5 |
| Pe 526 | 50 | | | 50 | 151 400 | 4,7 | 13,3 |
| Pe 529 | 50 | 10 | | 40 | 169 400 | 4,3 | 9 |
| LCMc 1295 | 50 | 10 | | 40 | 188 800 | 4,1 | 11,2 |
| Pe 548 | 30 | 30 | | 40 | 174 800 | 5 | 7,6 |

Tableau II

| Essai | VIE | | Point d'écoulement (0,3%/200 N) |
|---|---|---|---|
| Pe 525 | (1,8%) | 136 | —36 |
| Pe 526 | (2%) | 138,5 | —30 |
| Pe 529 | (1,9%) | 134 | —30 |

Tableau III

Caractère dispersant

| Essai | MADAME % (polymérisé en masse) | MADAME % (greffé) | NVP % (greffé) | NVI % (greffé) | test à la tache |
|---|---|---|---|---|---|
| Pe 531 | | | 4 | | 0 0 0 0 |
| Pe 541 | | | 2 | | 0 0 0 0 |
| LCMc 1299 | | | | 4 | 5 4+ 3 3 |
| LCMc 1307 | | | | 2 | 4 3+ 3+ 2 |
| Pe 538 | 2 | | 2 | | 5 5 5 4 |
| LCMc 1309 | 1 | | 1 | | 5 5 1 1 |
| Pe 559 | 2 | | | 2 | 5 4 4 1 |
| LCMc 1316 | 4 | | | | 5 5 4 1 |
| LCMc 1320 | | 4 | | | 2 2 2 0 |
| Pe 567 | 2 | | 1 | 0,5 | 5 5 5 4 |
| Pe 573 | 1 | | 1 | 0,5 | 5 5 5 4 |
| LCMc 1337 | 1 | | 1 | 0,5 | 5 5 5 4 |
| Pe 574 | 1 | | 1 | 0,5 | 5 5 5 4 |
| LCMc 1339 | 1 | | 1 | 0,5 | 5 5 5 4 |

6

Tableau IV

Propriétés des mélanges Pe 529/« SHELLVIS 50 »

| Essai | »SHELLVIS« % | $\eta$ (mm²/s) | E | $\mu$ (mm²/s) | $\tau$ |
|---|---|---|---|---|---|
| LCMc 1305/1 | 75 | 37,4 | | | |
| LCMc 1305/2 | 60 | 25,2 | 1,7 | 13,50 | 4,25 |
| LCMc 1305/3 | 50 | 20,8 | 2 | 13,80 | 6 |
| LCMc 1305/4 | 40 | 17,5 | 2,3 | 13,92 | 6,7 |
| LCMc 1305/5 | 25 | 14,6 | 2,9 | 14,05 | 6,8 |
| LCMc 1305/7 | 10 | 12,1 | 3,85 | 14,01 | 9 |
| Pe 529 | 0 | 11,4 | 4,3 | 13,98 | 9 |

$\eta$ = viscosité à 100 ºC d'une solution à 3 % de matières actives.

$\mu$ = viscosité à 100 ºC de la solution correspondant au pouvoir épaississant.

**Revendications**

1. Additifs pour huiles lubrifiantes essentiellement constitués par des copolymères greffés de masse moléculaire en poids comprise entre 80 000 et 200 000, présentant une polydispersité aussi faible que possible et un paramètre de solubilité proche de celui des huiles auxquelles ils sont destinés, lesdits copolymères greffés étant formés d'un tronc dérivé d'un monomère styrénique, d'un méthacrylate de diaminoalkyle et d'au moins un méthacrylate d'alkyle en $C_{12}$-$C_{20}$, au moins 80 % en poids dudit méthacrylate d'alkyle étant constitué par un méthacrylate d'alkyle en $C_{16-20}$, et de greffons dérivés d'au moins un monomère vinylique dispersant choisi parmi la N-vinylpyrrolidone, le N-vinylimidazole, la N-vinylpyridine et les dérivés analogues à fonction azotée, la quantité de greffons dérivés du ou des monomères vinyliques dispersants représentant de 1 à 3 % du poids total dudit copolymère greffé, lesdits additifs étant caractérisés en ce que la quantité de motifs dérivés du monomère styrénique représente de 35 à 55 % en poids dudit copolymère greffé.

2. Additifs selon la revendication 1, caractérisés en ce que le pourcentage de monomère styrénique, exprimé en poids rapporté au poids total des monomères, est compris entre 40 et 50 %.

3. Additifs selon la revendication 1 ou 2 caractérisés en ce que le pourcentage de méthacrylate de diaminoalkyle, exprimé en poids rapporté au poids total des monomères, est compris entre 0,5 et 5 %.

4. Additifs selon l'une quelconque des revendications 1 à 3 caractérisés en ce qu'ils consistent en un tétrapolymère de styrène/méthacrylate de lauryle/méthacrylate de cétyle/méthacrylate de diméthylaminoéthyle greffé par de la N-vinylpyrrolidone et de la N-vinylimidazole.

5. Additifs selon la revendication 4 caractérisés en ce que le rapport pondéral N-vinylpyrrolidone/N-vinylimidazole est compris entre 1/1 et 2/1.

6. Additifs selon la revendication 4 ou 5 caractérisés en ce que le tétrapolymère greffé est constitué de styrène/méthacrylate de lauryl/méthacrylate de cétyle/métacrylate de diméthylaminoéthyle (1 %) greffé par de la N-vinylpyrrolidone (1 %) et de la N-vinylimidazole (0,5 %).

7. Additifs selon l'une quelconque des revendications 1 à 6, caractérisés en ce qu'ils comportent une quantité efficace d'un antioxydant usuel.

8. Mélanges pour améliorer les huiles lubrifiantes, caractérisés en ce qu'ils sont obtenus par mélange d'un additif selon l'une quelconque des revendications 1 à 7 avec un polymère styrénique.

9. Mélanges selon la revendication 8, caractérisés en ce que le rapport additif/polymère styrénique est de 90/10 à 50/50 en poids environ.

10. Mélanges selon la revendication 8 ou 9, caractérisés en ce que les polymères styréniques sont choisi parmi les copolymères connus pour leur pouvoir épaississant : styrène-isoprène hydrogéné ; styrène-butadiène hydrogéné, styrène-isobutène.

11. Application des additifs et mélanges selon l'une quelconque des revendications 1 à 10 à l'amélioration des huiles lubrifiantes, à raison de 1 à 5 % en poids, de façon à atteindre la viscosité de l'huile requise par l'utilisateur.

12. Procédé de préparation des additifs du type tétrapolymère greffé selon l'une quelconque des revendications 1 à 6, dans lequel on polymérise en masse la quantité totale des monomères de styrène, de

7

méthacrylate(s) d'alkyle(s) et de méthacrylate de dialkylaminoalkyle en présence d'un amorceur radicalaire comme l'azobisisobutyronitrile à 85 °C environ, puis on greffe par le ou les monomères dispersants en présence d'un amorceur radicalaire comme l'azodiisobutyronitrile, puis on élève la température à 125 °C et on termine la réaction, 4/5 de la quantité d'amorceur étant mise en œuvre pour la polymérisation du tronc et 1/5 pour le greffage.

**Claims**

1. Additives for lubricating oils, consisting essentially of graft copolymers of weight molecular mass of between 80,000 and 200,000, having a polydispersity which is as low as possible and a solubility parameter close to that of the oils for which they are intented, the said graft copolymers consisting of a backbone derived from a styrene-based monomer, a diaminoalkyl methacrylate and at least ond $C_{12}$-$C_{20}$-alkyl methacrylate, at least 80 % by weight of the said alkyl methacrylate consisting of a $C_{16-20}$-alkyl methacrylate, and of grafts derived from at least one dispersant vinyl monomer chosen from N-vinylpyrrolidone, N-vinylimidazole, N-vinylpyridine and similar derivatives containing a nitrogenous functional group, the quantity of grafts derived from the dispersant vinyl monomer(s) representing from 1 to 3 % of the total weight of the said graft copolymer, the said additives being characterized in that the quantity of units derived from the styrene-based monomer represents from 35 to 55 % by weight of the said graft copolymer.

2. Additives according to Claim 1, characterized in that the percentage of styrene-based monomer, expressed by weight relative to the total weight of the monomers, is between 40 and 50 %.

3. Additives according to Claim 1 or 2, characterized in that the percentage of diaminoalkyl methacrylate, expressed by weight relative to the total weight of the monomers, is between 0.5 and 5 %.

4. Additives according to any one of Claims 1 to 3, characterized in that they consist of a tetrapolymer of styrene/lauryl methacrylate/cetyl methacrylate/dimethylaminoethyl methacrylate grafted with N-vinylpyrrolidone and with N-vinylimidazole.

5. Additives according to Claim 4, characterized in that the weight ratio N-vinylpyrrolidone/N-vinylimidazole is between 1/1 and 2/1.

6. Additives according to Claim 4 or 5, characterized in that the graft tetrapolymer consists of styrene/lauryl methacrylate/cetyl methacrylate/dimethylaminoethyl methacrylate (1 %) grafted with N-vinylpyrrolidone (1 %) and with N-vinylimidazole (0.5 %).

7. Additives according to any one of Claims 1 to 6, characterized in that they comprise an effective quantity of a usual antioxidant.

8. Mixtures for improving lubricating oils, characterized in that they are obtained by mixing an additive according to any one of Claims 1 to 7 with a styrene-based polymer.

9. Mixtures according to Claim 8, characterized in that the ratio additive/styrene-based polymer is approximately from 90/10 to 50/50 by weight.

10. Mixtures according to Claim 8 or 9, characterized in that the styrene-based polymers are chosen from the copolymers known for their thickening capacity : hydrogenated isoprene-styrene, hydrogenated butadiene-styrene, styrene-isobutene.

11. Application of the additives and mixtures according to any one of Claims 1 to 10 to the improvement of lubricating oils, in a proportion of 1 to 5 % by weight, so as to attain the oil viscosity required by the user.

12. Process for the preparation of the additives of the graft tetrapolymer type according to any one of Claims 1 to 6, in which the total quantity of the styrene, alkyl methacrylate(s) and dialkylaminoalkyl methacrylate monomers is polymerized in bulk in the presence of a radical initiator such as azobisisobutyronitrile at approximately 85 °C, and is grafted with the dispersant monomer(s) in the presence of a radical initiator such as azodiisobutyronitrile, and then the temperature is raised to 125 °C and the reaction is terminated, 4/5 of the quantity of initiator being used for the polymerization of the backbone and 1/5 for the grafting.

**Patentansprüche**

1. Additive für Schmieröle im wesentlichen bestehend aus gepfropften Copolymeren mit einer Molekularmasse in Gewicht von zwischen 80.000 und 200.000, die eine so geringe Polydispersität wie möglich aufweisen und einen Löslichkeitsparameter in Nähe dessen der Öle, für die sie bestimmt sind, wobei diese gepfropten Copolymere aus einem Strang gebildet sind, der von einem Styrolmonomeren, einem Diaminoalkylmethacrylat und wenigstens einem Alkylmethacrylat mit $C_{12}$-$C_{20}$ abgeleitet ist, wobei wenigstens 80 Gew.% dieses Alkylmethacrylats aus einem Alkylmethacrylat mit $C_{16}$-$C_{20}$ besteht, sowie Pfropfen, die von wenigstens einem dispergierenden vinylischen Monomeren abgeleitet sind, ausgewählt aus N-Vinylpyrrolidon, N-Vinylimidazol, N-Vinylpyridin und den analogen Derivaten mit Stickstoff-Funktion, wobei die Menge der von dem oder den dispergierenden vinylischen Monomeren abgeleiteten Pfropfen 1 bis 3 Gew.% des Gesamtgewichts der gepfropften Copolymeren ausmacht, wobei diese Additive dadurch gekennzeichnet sind, daß die Menge der von dem Styrolmonomeren abgeleiteten Bau-Einheiten 35 bis 55 Gew.% dieses gepfropften Copolymeren ausmacht.

2. Additive nach Anspruch 1, dadurch gekennzeichnet, daß der prozentuale Anteil an Styrolmonomerem, ausgedrückt in Gewicht, bezogen auf das Gesamtgewicht der Monomeren, zwischen 40 und 50 % beträgt.

3. Additive nach Anspruch 1 oder 2, dadurch gekennzeichnet, daß der prozentuale Anteil an Diaminoalkylmethacrylat, ausgedrückt in Gewicht, bezogen auf das Gesamtgewicht der Monomeren zwischen 0,5 und 5 % beträgt.

4. Additive nach einem der Ansprüche 1 bis 3, dadurch gekennzeichnet, daß sie aus einem Tetrapolymeren aus Styrol/Laurylmethacrylat/Cetylmethacrylat/Dimethylaminoethylmethacrylat gepfropft mit N-Vinylpyrrolidon und N-Vinylimidazol bestehen.

5. Additive nach Anspruch 4, dadurch gekennzeichnet, daß das Gewichtsverhältnis N-Vinylpyrrolidon/N-Vinylimidazol zwischen 1/1 und 2/1 beträgt.

6. Additive nach Anspruch 4 oder 5, dadurch gekennzeichnet, daß das gepfropfte Tetrapolymere aus Styrol/Laurylmethacrylat/Cetylmethacrylat/Dimethylaminoethylmethacrylat (1 %) gepfropft mit N-Vinylpyrrolidon (1 %) und N-Vinylimidazol (0,5 %) besteht.

7. Additive nach einem der Ansprüche 1 bis 6, dadurch gekennzeichnet, daß sie eine wirksame Menge eines herkömmlichen Oxidationshemmers enthalten.

8. Mischungen zur Verbesserung von Schmierölen dadurch gekennzeichnet, daß sie erhalten werden durch Mischen eines Additivs gemäß einem der Ansprüche 1 bis 7 mit einem Styrolpolymeren.

9. Mischungen gemäß Anspruch 8, dadurch gekennzeichnet, daß das Verhältnis Additiv/Styrolpolymer etwa 90/10 bis 50/50, bezogen auf das Gewicht, beträgt.

10. Mischungen nach den Ansprüchen 8 oder 9, dadurch gekennzeichnet, daß die Styrolpolymeren ausgewählt werden aus den für ihr Verdickungsvermögen bekannten Copolymeren : Styrol-hydrogeniertes Isopren ; Styrol-hydrogeniertes Butadien, Styrol-Isobuten.

11. Verwendung von Additiven und Gemischen gemäß einem der Ansprüche 1 bis 10 zur Verbesserung von Schmierölen in einer Menge von 1 bis 5 Gew.%, so daß die vom Anwender gewünschte Viskosität des Öls erreicht wird.

12. Verfahren zur Herstellung von Additiven vom Typ des gepfropften Tetrapolymers gemäß einem der Ansprüche 1 bis 6, bei dem man in der Masse die Gesamtmenge der Monomeren Styrol, Alkylmethacrylat(e) und Dialkylaminoalkylmethacrylat in Gegenwart eines radikalischen Starters wie Azobisisobutyronitril bei ungefähr 85 °C polymerisiert, dann mit dem oder den dispergierenden Monomeren in Gegenwart eines radikalischen Starters wie Azodiisobutyronitril pfropft und dann die Temperatur auf 125 °C erhöht und man die Reaktion beendet, wobei 4/5 der Menge des Starters für die Polymerisation des Strangs und 1/5 für das Aufpfropfen eingesetzt werden.